# EUROPEAN PATENT APPLICATION

(11) **EP 4 752 540 A1**
(43) Date of publication of application: **03.06.2026**
(21) Application number: 25219896.5
(22) Date of filing: 01.12.2025
(51) Int. Cl.: G01N 25/72, G06N 20/00, G01N 23/046, G06T 7/00

(54) **SYSTEM AND METHOD FOR INSPECTING A COMPONENT WITH INFRARED THERMOGRAPHY**

(30) Priority: 29.11.2024 US 202418963903
(71) Applicant: Pratt & Whitney Canada Corp., (01BE5) Longueuil, QC J4G 1A1 (CA)
(72) Inventor: ROCHER, Guy Joel, (01BE5) Longueuil, J4G 1A1 (CA)
(74) Representative: Dehns

(57) **Abstract**

Systems (38; 138) and methods (1000; 2000; 3000) for inspecting components (12) with thermography are provided. The systems (38; 138) and methods (1000; 2000; 3000) facilitate the selection of thermography parameters (45) for a particular inspection situation. A method (1000; 2000; 3000) includes executing a machine learning algorithm (70A, 70B) to determine one or more thermography parameters (45) based on one or more characteristics (37) of the component (12), and performing a thermographic inspection according to the one or more thermography parameters (45). The thermographic inspection includes exciting the component (12) to induce a thermal response in a region of the component (12) containing a defect (22), and acquiring a thermographic image (46) of the region of the component containing the defect (22).

## Description

### TECHNICAL FIELD

The disclosure relates generally to non-destructive inspection, and more particularly to inspecting components with thermography.

### BACKGROUND

Infrared thermography can be used to detect defects in components. However, suitable process parameters used to perform infrared thermography can be different for different inspection situations. The process parameters are typically difficult and time-consuming to determine Improvement is desirable.

### SUMMARY

In one aspect, the present invention describes a method of inspecting a component with thermography. The method comprises:
executing a machine learning algorithm to determine one or more thermography parameters based on one or more characteristics of the component, the machine learning algorithm having been trained using machine learning on historical data associating previous thermography parameters with previous characteristics of components inspected using thermography; and
using the one or more thermography parameters:
   exciting the component to induce a thermal response in a region of the component containing a defect; and
   acquiring, with an infrared sensor while the thermal response is exhibited, a thermographic image of the region of the component containing the defect.

In an embodiment of the above, the one or more thermography parameters may include an excitation setting for exciting the component. The method may include exciting the component according to the excitation setting.

In an embodiment according to any of the previous embodiments, the excitation setting may be an excitation frequency.

In an embodiment according to any of the previous embodiments, the one or more thermography parameters may include one or more image acquisition settings for acquiring the thermographic image. The method may include acquiring the thermographic image according to the one or more image acquisition settings.

In an embodiment according to any of the previous embodiments, the one or more image acquisition settings may include a resolution of the infrared sensor.

In an embodiment according to any of the previous embodiments, the one or more image acquisition settings may include a distance of the component from the infrared sensor.

In an embodiment according to any of the previous embodiments, the method may comprise extracting the one or more characteristics of the component from a digital three-dimensional representation of the component acquired by X-ray computed tomography before executing the machine learning algorithm.

In an embodiment according to any of the previous embodiments, the one or more characteristics of the component may include a size of the region of the component containing a defect.

In an embodiment according to any of the previous embodiments, the one or more characteristics of the component may include the region of the component containing a defect.

In an embodiment according to any of the previous embodiments, the method may comprise, using X-ray computed tomography (CT), scanning the component before executing the machine learning algorithm to acquire a digital three-dimensional representation of the component.

In an embodiment according to any of the previous embodiments, the method may comprise extracting the one or more characteristics of the component from the digital three-dimensional representation of the component.

In an embodiment according to any of the previous embodiments, the machine learning algorithm may be a first machine learning algorithm. The method may include: before scanning the component using X-ray CT, executing a second machine learning algorithm to determine one or more CT parameters based on the one or more characteristics of the component; and scanning the component using X-ray CT according to the one or more determined CT parameters.

**In** an embodiment according to any of the previous embodiments, the method may comprise, before executing the machine learning algorithm, training the machine learning algorithm using machine learning and the historical data associating the previous thermography parameters with the previous characteristics of components inspected using thermography.

**In** an embodiment according to any of the previous embodiments, the one or more thermography parameters may be one or more first thermography parameters. Exciting the component and acquiring the thermographic image may be performed with a thermography system. The method may include, before exciting the component to induce the thermal response: determining one or more second thermography parameters using the one or more characteristics of the component and a digital twin of the thermography system; and validating the one or more first thermography parameters by comparing the one or more first thermography parameters with the one or more second thermography parameters.

Embodiments may include combinations of the above features.

**In** another aspect, the present invention describes a method of inspecting a component with thermography. The method may comprise:
using X-ray computed tomography (CT), scanning the component to acquire a digital three-dimensional representation of the component;
extracting one or more characteristics of the component from the digital three-dimensional representation of the component acquired by X-ray CT;
executing a machine learning algorithm to determine one or more thermography parameters based on the one or more characteristics of the component, the machine learning algorithm having been trained using machine learning on historical data associating previous thermography parameters with previous characteristics of components inspected using thermography;
performing thermography on the component according to the one or more thermography parameters by:
   exciting the component to induce heating in a part of the component containing a defect; and
   acquiring a thermographic image of the part of the component.

In an embodiment of the above, the one or more thermography parameters may include an excitation setting for exciting the component. The method may include exciting the component according to the excitation setting.

In an embodiment according to any of the previous embodiments, the one or more thermography parameters may include one or more image acquisition settings for acquiring the thermographic image. The method may include acquiring the thermographic image according to the one or more image acquisition settings.

In an embodiment according to any of the previous embodiments, the machine learning algorithm may be a first machine learning algorithm. The one or more characteristics of the component may be one or more first characteristics of the component. The method may include, before scanning the component using X-ray CT, executing a second machine learning algorithm to determine one or more CT parameters based on one or more second characteristics of the component, the machine learning algorithm having been trained using machine learning on historical data associating previous CT parameters with previous characteristics of components inspected using X-ray CT. The scanning of the component using X-ray CT may be performed according to the one or more determined CT parameters.

Embodiments may include combinations of the above features.

In a further aspect, the present invention describes a system for inspecting a component with thermography. The system may comprise:
a transducer operable to induce a vibration in the component;
an infrared sensor operable to acquire a thermographic image of the component;
one or more computers operatively connected to the transducer and to the infrared sensor, the one or more computers being configured to:
   execute a machine learning algorithm to determine one or more thermography parameters based on one or more characteristics of the component, the machine learning algorithm having been trained using machine learning on historical data associating previous thermography parameters with previous characteristics of components inspected using thermography;
   using the one or more thermography parameters:
      cause the transducer to excite the component to induce a thermal response in a region of the component containing a defect; and
      cause the infrared sensor to acquire a thermographic image of the component while the thermal response is exhibited.

In an embodiment of the above, the system may comprise an X-ray source and an X-ray detector cooperatively operable to perform X-ray computed tomography of the component, the one or more computers being operatively connected to the X-ray source and the X-ray detector, wherein the one or more computers are configured to, before executing the machine learning algorithm:
cause the X-ray source and the X-ray detector to perform X-ray computed tomography on the component to acquire a digital three-dimensional representation of the component; and
extract the one or more characteristics of the component from the digital three-dimensional representation of the component acquired by X-ray computed tomography.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 shows a schematic axial cross-section view of a turbofan gas turbine engine as an exemplary aircraft power plant;
FIG. 2A is a schematic illustration of an exemplary industrial computed tomography system for inspecting a component of the aircraft power plant;
FIG. 2B is a schematic illustration of an exemplary thermography system for inspecting the component of the aircraft power plant;
FIG. 2C is a schematic illustration of a combined inspection system combining computed tomography and thermography functionalities;
FIG. 3 is a schematic illustration of another exemplary thermography system for inspecting a component of the aircraft power plant;
FIG. 4 is a schematic illustration of an exemplary computer of the combined system of FIG. 2C;
FIG. 5A is a schematic representation of a magnified portion of part of a computed tomography scan acquired with the industrial computed tomography system of FIG. 2A and/or the combined system of FIG. 2C;
FIG. 5B is a schematic representation of a magnified portion of part of a thermographic image acquired with the thermography system of FIG. 2B, the thermography system of FIG. 2C and/or the combined system of FIG. 3;
FIG. 6 is a flow diagram of an exemplary method of inspecting a component with thermography;
FIG. 7 is a flow diagram of another exemplary method of inspecting a component with thermography;
FIG. 8 is a flow diagram of another exemplary method of inspecting a component with industrial computed tomography and thermography;
FIG. 9 is a schematic representation of an exemplary machine learning algorithm implemented as an artificial neural network;
FIG. 10 shows a table containing exemplary historical data used to train a machine learning algorithm using machine learning to determine one or more computed tomography parameters based on one or more characteristics of the component to be inspected;
FIG. 11A shows a table containing exemplary historical data used to train a machine learning algorithm using machine learning for determining one or more thermography parameters based on one or more characteristics of the component to be inspected; and
FIG. 11B shows a table containing other exemplary historical data used to train a machine learning algorithm using machine learning for determining one or more thermography parameters based on one or more characteristics of the component to be inspected.

### DETAILED DESCRIPTION

The present disclosure describes systems and methods for inspecting components of an aircraft power plant using thermography and optionally also using industrial computed tomography (CT). In some embodiments, the methods and systems described herein may facilitate the selection of process parameters for performing a thermographic inspection tailored for the particular inspection situation.

Inspecting a component with infrared thermography can include acquiring a thermographic image when a mechanical excitation is applied to the component to induce a thermal response at a location of a defect in the component. Optimal thermography parameters such as excitation settings and image acquisition settings may vary from one inspection situation to another. In some embodiments, the systems and methods described herein may determine one or more suitable thermography parameters using a computer-implemented artificial intelligence (AI) algorithm (model) that is trained using machine learning (ML), and historical data associating previous thermography parameters with previous characteristics of components previously inspected using thermography. In some embodiments, determining suitable thermography parameters through the use of a ML algorithm may also facilitate the automation of the inspection of components using thermography in a high-throughput environment.

The methods and systems described herein may be used on newly-manufactured components, newly-refurbished components and/or on in-service components to determine whether a component is suitable for service in the aircraft power plant. In some embodiments, the methods and systems described herein may improve the reliability of infrared thermography, health monitoring and component life estimations. Aspects of various embodiments are described through reference to the drawings.

The term "connected" may include both direct connection and indirect connection. As used herein, the singular forms "a," "an," and "the" are intended to include the plural forms as well, unless the context clearly indicates otherwise.

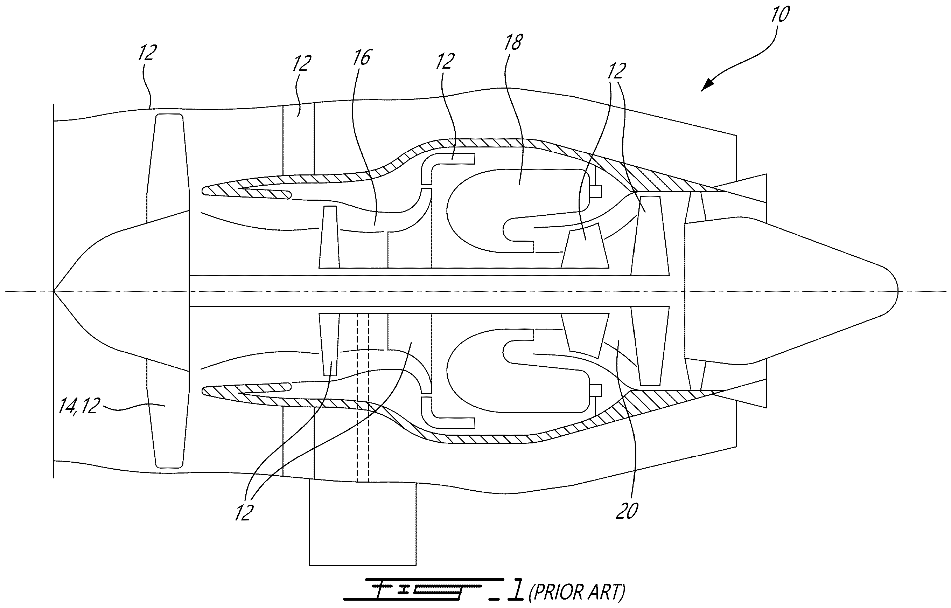

FIG. 1 illustrates an exemplary aircraft power plant 10 in the form of a turbofan gas turbine engine of a type preferably provided for use in subsonic flight. In various embodiments, power plant 10 may be configured to propel an aircraft to which power plant 10 is mounted, or power plant 10 may be an auxiliary power unit (APU) configured to perform non-propulsion functions onboard the aircraft. In some embodiments, power plant 10 may be or include a thermal engine such as gas turbine engine, a piston engine or a rotary (e.g., Wankel) engine. In some embodiments, power plant 10 may be a purely electric power plant. In some embodiments, power plant 10 may be a hybrid power plant including a thermal engine and an electric motor that cooperatively propel the aircraft. Power plant 10 may include one or more components 12 (referred hereinafter in the singular) that may be used with the methods and systems described herein in order to assess the health condition of such component(s) 12.

Power plant 10 as illustrated in FIG. 1 may generally include, in serial flow communication, fan 14 through which ambient air is propelled, multistage compressor 16 for pressurizing the air, combustor 18 in which the compressed air is mixed with fuel and ignited for generating an annular stream of hot combustion gases, and turbine section 20 for extracting energy from the combustion gases. In various embodiments, component 12 may include a rotor blade or a stator vane that is intended to be part of compressor 16, a rotor blade or a stator vane that is intended to be part of turbine section 20, a blade of fan 14, a bladed disc, or another relatively rigid component such as a duct (e.g., tube), a casing (shroud) surrounding fan 14, a structural brace such as a strut for example. In some embodiments, component 12 may be a single/sole part having a unitary (i.e., monolithic) construction.

In various embodiments, component 12 may be made from a metallic material, a polymer, a ceramic and/or a fiber-reinforced composite material including (e.g., carbon) fibers that are embedded in a polymeric matrix for example. Component 12 may be manufactured using one or more known or other manufacturing processes. In various embodiments, component 12 may be manufactured using one or more processes such as additive manufacturing (e.g., layer-by-layer 3D printing), (e.g., investment) casting, (e.g., metal, resin) injection moulding, forging, stamping, and/or subtractive manufacturing (e.g., machining, grinding, drilling) for example. In some embodiments, component 12 may be a cast metallic component.

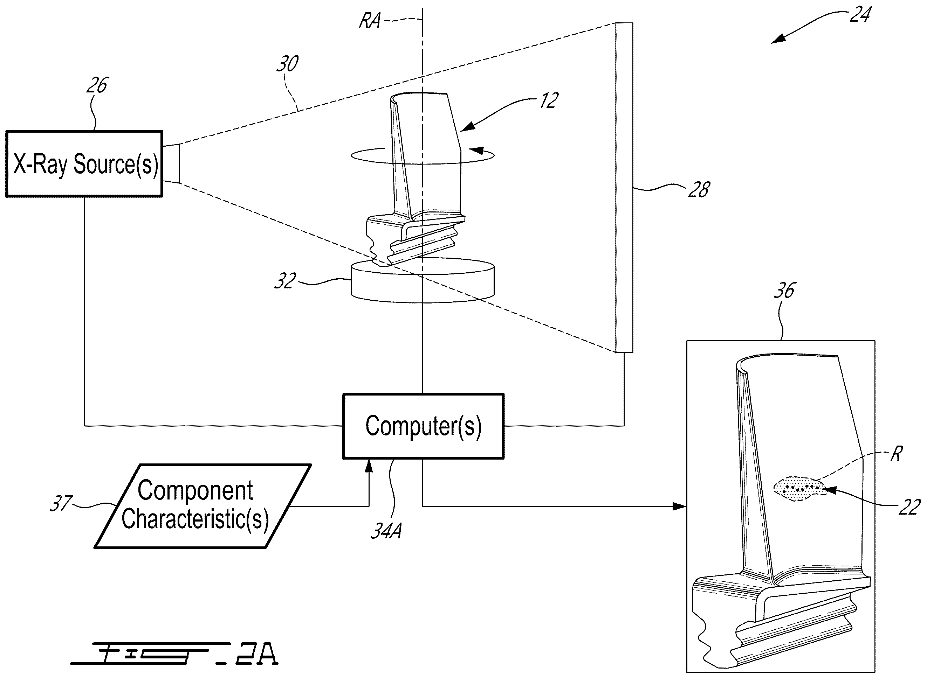

In some situations, component 12 may include one or more (e.g., internal or surface) defects 22 (shown in FIG. 2A) that may affect the service life of component 12. For example, defect 22 may include a crack, a void, an inhomogeneity, corrosion, a disbond in a composite material, a delamination in a composite material, and/or a flaw resulting in broken fibers in fiber-reinforced materials. Defect 22 may include a (e.g., shrinkage) casting defect such as microporosity or microshrinkage (i.e., voids in the form of stringers shorter than shrinkage cracks), which can be difficult to detect and/or characterize with existing non-destructive inspection methods such as X-ray CT due to the alignment of voids, grain diffraction, and potentially other factors. In some situations, additively manufactured components may exhibit an internal defect 22 due to structural complexities, material variability and potentially other factors.

Defect 22 may be generated during manufacturing and/or during service. The influence of defect 22 on the service life of component 12 may depend on the type, size and location of defect 22, and may also depend on the function of component 12 and the operating conditions of component 12 during the operation of power plant 10. For example, when component 12 is subjected to (e.g., mechanical and/or thermal) cyclic loading (e.g., low-cycle fatigue or high-cycle fatigue), the presence of internal and/or surface defect 22 may increase the risk of fatigue crack initiation and/or crack propagation within component 12 and affect the service life of component 12.

FIG. 2A is a schematic illustration of an exemplary industrial X-ray CT system 24 that may optionally be used in preparation for the inspection of component 12 using thermography. CT system 24 may include one or more X-ray sources 26 (referred hereinafter in the singular), which may be a X-ray tube. CT system 24 may include one or more X-ray detectors 28 (referred hereinafter in the singular) positioned diametrically opposite to X-ray source 26 and that is configured to detect X-rays 30 that are emitted by X-ray source 26. In various embodiments, X-ray detector 28 may include scintillation (solid-state) detector(s) and/or ionization (xenon gas) detectors. In some embodiments, X-ray detector 28 may be a panel that includes an array of detectors.

X-ray source 26 may be aimed toward X-ray detector 28 so that X-rays 30 that are emitted by X-ray source 26 may be detected by X-ray detector 28. Component 12 may be disposed between X-ray source 26 and X-ray detector 28 so that component 12 may intersect X-rays 30 that are emitted by X-ray source 26. In some embodiments, X-ray source 26 and X-ray detector 28 may be motorized to rotate together around component 12 during inspection. Alternatively, X-ray source 26 and X-ray detector 28 may remain stationary during inspection while component 12 is rotated about rotation axis RA and intersecting the beam of X-rays 30 emitted by X-ray source 26.

CT system 24 may include fixture 32 (shown schematically) configured to hold component 12 during inspection. In some embodiments, fixture 32 may be a suitable clamp or chuck fixedly mounted to a numerically-controlled rotary table to permit controlled rotation of component 12 about rotation axis RA during inspection.

X-ray source 26 and X-ray detector 28 may be cooperatively operable to perform X-ray CT of component 12 while component 12 is held by fixture 32. X-ray CT may be a computerized X-ray imaging procedure in which the beam of X-rays 30 is aimed at component 12 while component 12 is rotated about rotation axis RA. The detection of X-rays 30 via X-ray detector 28 may be used to produce signals that are processed by one or more computers 34A (referred hereinafter in the singular) to generate cross-sectional images, or "slices" of component 12. These slices or tomographic images may together provide more detailed information than conventional X-ray scanning. Once a number of successive slices are collected by computer 34A, they can be digitally stacked together to form a digital three-dimensional (3D) representation (i.e., image or scan) of component 12 to allow the identification of structure(s) that may potentially be indicative of defect(s) 22.

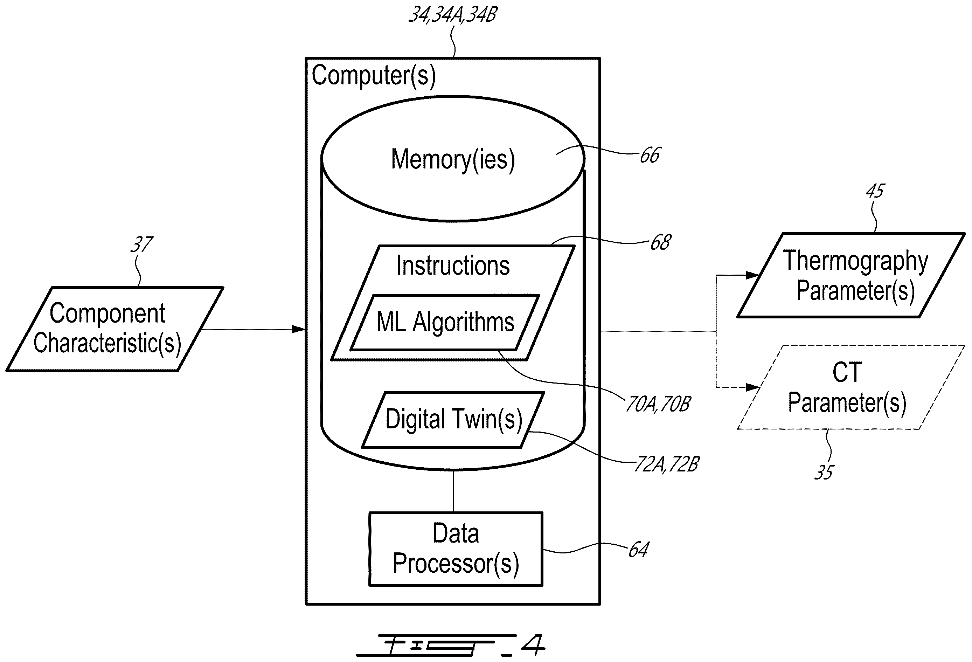

Computer 34A may be operatively connected to (e.g., in data communication with) one or more elements of CT system 24 to control an operation of CT system 24. For example, computer 34A may be operatively connected to X-ray source 26 to control an operation and/or movement of X-ray source 26. Computer 34A may be operatively connected to X-ray detector 28 to control an operation and/or movement of X-ray detector 28. In some embodiments, computer 34A may be operatively connected to fixture 32 via one or more actuators to control an operation (e.g., opening/closing) of fixture 32 and/or a movement of fixture 32 to cause a rotation of component 12 about rotation axis RA or other (e.g., linear and/or rotary) movement of component 12 relative to X-ray source 26 and X-ray detector 28. In some embodiments, computer 34A may determine one or more CT (process) parameters 35 (shown in FIG. 4) based on one or more characteristics 37 of component 12, and control the operation of CT system 24 accordingly. Such CT parameters 35 may include an excitation voltage for X-ray source 26, positioning/field of view of X-ray source 26 and X-ray detector 28, the orientation of X-ray source 26 and X-ray detector 28 relative to component 12, an exposure time, and resolution of X-ray detector 28. As explained below, computer 34A may (e.g., automatically) determine such CT parameters 35 by executing first ML algorithm 70A (shown in FIG. 4).

In an automated environment, CT system 24 may optionally include an optical camera that is used to automatically locate component 12 prior to and in preparation for X-ray CT scanning. In some embodiments, such optical camera may optionally be used to perform a dimensional inspection of component 12.

Computer 34A may be configured to collect the tomographic images and digitally stack them together to define digital 3D CT scan 36 of a portion of component 12 or substantially an entirety of component 12. In some embodiments, computer 34A may optionally be configured to process CT scan 36 of component 12 acquired by CT system 24 and identify region R of component 12 potentially containing defect 22.

In some situations, CT system 24 may provide a relatively rapid identification of region R that potentially contains defect 22 but may not, on its own, provide a sufficiently detailed characterization of defect 22 for the purpose of evaluating a health condition of component 12. In other words, CT system 24 may provide a rapid but coarse evaluation of component 12 for the purpose of narrowing down one or more specific regions R that require further analysis. As explained below, the further (e.g., finer) analysis for the purpose of evaluating a health condition of component 12 may be performed using infrared thermography in region(s) R identified by CT system 24.

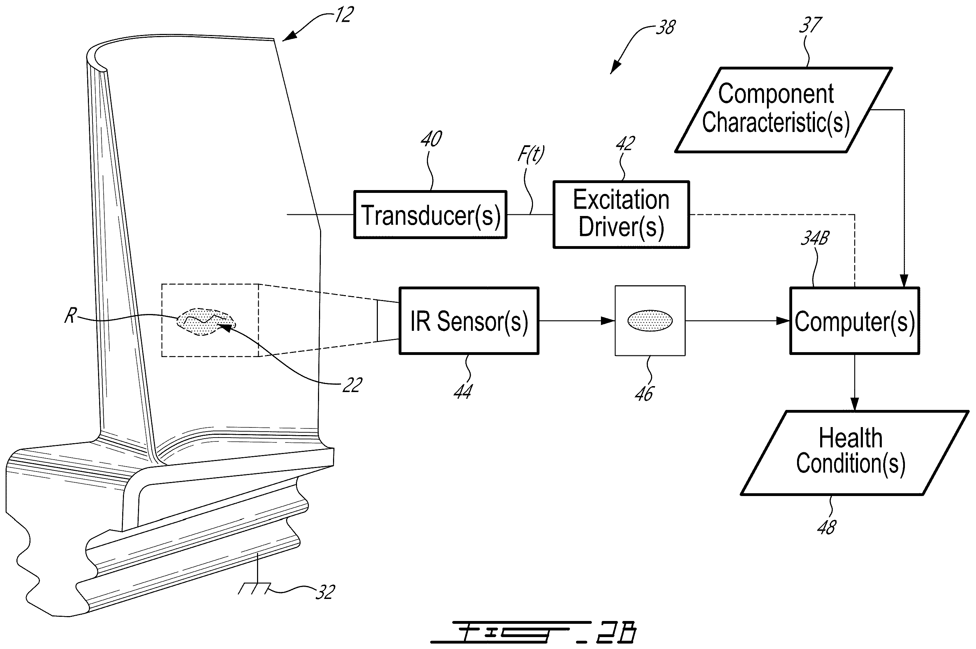

FIG. 2B is a schematic illustration of an exemplary thermography system 38 for determining health condition 48 of component 12 using non-destructive inspection of materials with infrared thermography. Health condition(s) 48 may include an estimated remaining service life of component 12 and may be provided to an operator of combined system 50 or other maintenance personnel via a display device for example. The remaining service life may be quantified as a number of loading/unloading cycles, a number of flights/missions, a number of hours of operation of power plant 10, or as a fraction (e.g., percentage) of a nominal (e.g., baseline, average, expected) service life of component 12. For example, the nominal service life may be an expected service life of a version of component 12 that is devoid of defects that are outside an acceptable tolerance. Health condition 48 may include an identification of a service category from a limited set of possible service categories such as "acceptable", "needs rework" and "rejected", for example.

Infrared thermography may be performed after CT and in region(s) R has/have been identified in CT scan 36. Infrared thermography (also referenced herein as "thermography") uses a thermography measurement of a thermal response of a material during and/or shortly after mechanical excitation of the material. The mechanical excitation of component 12 may be provided using transducer 40, which may be an acoustic probe (e.g., ultrasonic horn) acoustically coupled to component 12 for acoustically exciting component 12, and/or a (e.g., hydraulic, pneumatic or electric) actuator drivingly coupled to component 12. Transducer 40 may be configured to convert energy in one form to energy in another form. In some embodiments, the excitation of component 12 may be provided electromagnetically. In various embodiments, the excitation may be delivered to component 12 using contact or non-contact methods. In some embodiments, the excitation of component 12 may be provided mechanically using transducer 40.

When using mechanical excitation of component 12, transducer 40 may induce a vibration into component 12. Transducer 40 may be operable in a controlled manner to input a vibration represented as a cyclic excitation F(t) (i.e., as a function of time) into component 12. In some embodiments, transducer 40 may include an actuator controlled (e.g., driven) by excitation driver 42 (e.g., controller), which may optionally be operatively connected to computer 34B. Excitation driver 42 may operate independently of computer 34B or may operate under the control/supervision of computer 34B. In some embodiments, excitation driver 42 and computer 34B may be in data communication with each other so that thermography (process) parameters 45 (shown in FIG. 4) of the excitation may be communicated from computer 34B to excitation driver 42 and/or from excitation driver 42 to computer 34B. The excitation delivered to component 12 may be uniform over the duration of the test, or may have one or more parameters that vary as a function of time. The excitation delivered to component 12 may be adjustable.

In some embodiments, computer 34B may determine one or more thermography parameters 45 based on one or more characteristics 37 of component 12, and control the operation of thermography system 38 accordingly. Such thermography parameters 45 may include one or more excitation settings for exciting the component and/or one or more image acquisition settings for acquiring thermographic image 46. As explained below, computer 34B may (e.g., automatically) determine such thermography parameters 45 by executing second ML algorithm 70B (shown in FIG. 4).

The mechanical excitation of component 12 or part thereof (e.g., in region R) may induce heat to be generated inside the material of component 12. For example, the presence of defect 22 may cause more heat to be generated in the vicinity of defect 22 compared to other regions devoid of defect 22 because the cyclic straining of the material may cause surfaces of defect 22 to rub together. In other words, adjacent and/or opposing surfaces of defect 22 may slide against each other and frictional heating may occur at a sliding interface of defect 22.

The excitation of component 12 may cause the material of component 12 to exhibit a thermal response that may be measured with one or more infrared (IR) detectors such as IR sensors 44 (referred hereinafter in the singular) by way of one or more digital thermographic images 46 (referred hereinafter in the singular). Since the part of component 12 containing defect 22 will generate more heat than other parts of component 12 that are devoid of defect 22, the thermal response will show an area of higher temperature that indicates the location and optionally also the type and severity of defect 22 within thermographic image 46. In some embodiments, the application of the excitation may be synchronized with the acquisition of thermographic image 46. In various embodiments, thermographic image 46 may be captured while the thermal response in the form of a temperature gradient indicative of defect 22 is being exhibited in component 12.

IR sensor 44 may be part of a suitable thermographic camera (also called an infrared camera or thermal imaging camera, thermal camera or thermal imager). IR sensor 44 may be operable to create digital thermographic image 46 using IR radiation, in a similar manner as a camera that forms an image using visible light. In some embodiments, IR sensor 44 may be sensitive to wavelengths from about 1,000 nm (1 micrometre or µm) to about 14,000 nm (14 µm).

The inspection of component 12 may be conducted while component 12 is not currently being used in power plant 10. For example, the inspection of component 12 may be conducted while component 12 is uninstalled from power plant 10 and held in fixture 32 outside of power plant 10. Alternatively, the inspection of component 12 may be conducted while component 12 is installed in power plant 10 and power plant 10 is not in operation. In various embodiments, the mechanical excitation applied to component 12 may not be representative of an expected in-use operating condition of component 12. In other words, the applied mechanical excitation may be different from an expected in-use condition experienced by component 12 during the operation of power plant 10.

Computer 34B may be operatively connected to (e.g., in data communication with) one or more elements of thermography system 38 to control an operation of thermography system 38, 138. Computer 34B may be in data communication with IR sensor 44 to receive data forming digital thermographic image 46. Using thermographic image 46 and optionally other data, computer 34B may be operable to generate one or more outputs indicative of one or more health conditions 48 (referred hereinafter in the singular) of component 12. In some embodiments, health condition 48 may be determined according to the teachings provided in U.S. Patent Application No. 18/821,005 (Title: SYSTEM AND METHOD FOR EVALUATING COMPONENTS USING THERMOGRAPHY) filed on August 30, 2024.

The impact of defect 22 on health condition 48 of component 12 may depend on one or more factors such as the type and geometry of component 12, the location of defect 22 on component 12, and other characteristics (e.g., type, severity) of defect 22. Component 12 may include a plurality regions R within which one or more defects 22 may be located. For example, when component 12 is a rotor (e.g., compressor or turbine) blade as shown in FIG. 2B, and defect 22 is closer to a root of the rotor blade, the remaining service life may be a first (e.g., lower) remaining service life. However, when the location of defect 22 is closer to a tip of the rotor blade, the remaining service life may be a second (e.g., higher) remaining service life different from the first remaining service life. In other words, a defect 22 in a more defect-sensitive location of component 12 may have a different impact on health condition 48 than an identical defect 22 at another less defect-sensitive location of component 12.

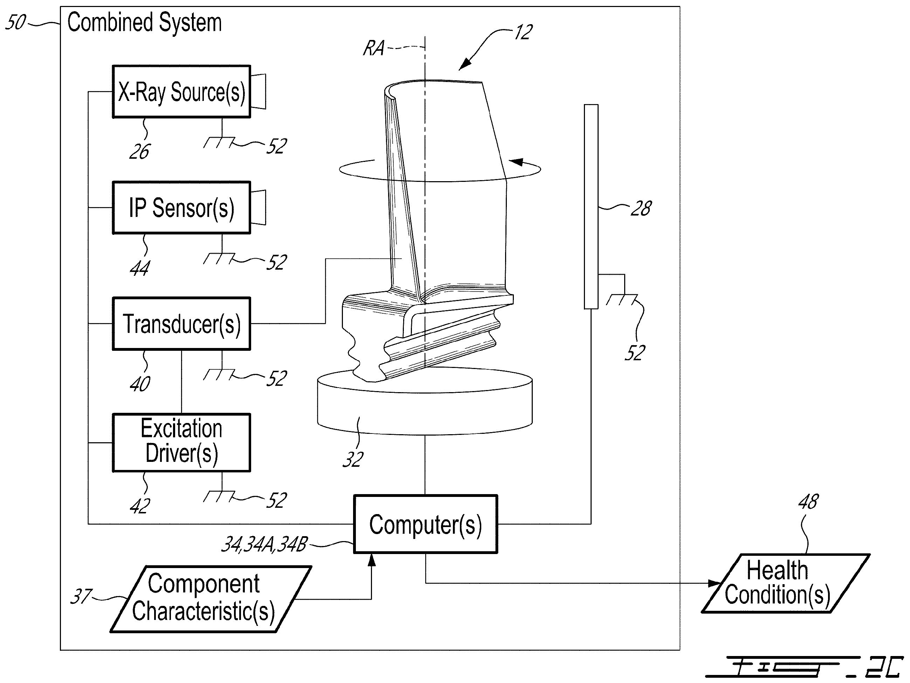

FIG. 2C is a schematic illustration of a combined inspection system 50 (referred hereinafter as "combined system 50") combining CT system 24 and thermography system 38. In some embodiments, CT system 24 and thermography system 38 may be separate systems so that component 12 may be installed in CT system 24 for undergoing CT, uninstalled from CT system 24 and then installed in thermography system 38 for undergoing infrared thermography. Alternatively, both CT system 24 and thermography system 38 may be combined/integrated together for a high-throughput production environment requiring only one single installation of component 12 that serves for both the CT and the infrared thermography processes. For example, component 12 may remain installed in the same fixture 32 for both the CT and the infrared thermography processes. In a high-throughput environment, combined system 50 may accommodate a plurality of components 12 in a tray for example and automatically or semi-automatically inspect the plurality of components 12 sequentially for example.

Combined system 50 may include both computers 34A and 34B or may include only one computer 34 that performs both the CT and thermography functionalities of computers 34A and 34B. To facilitate CT functionality, combined system 50 may include X-ray source 26 and X-ray detector 28. X-ray source 26 and/or X-ray detector 28 may be movably or fixedly mounted to a common chassis 52 of combined system 50. Computer 34 may be operatively connected to (e.g., in data communication with) X-ray source 26 and X-ray detector 28 to control the operation of X-ray source 26 and X-ray detector 28 and also acquire CT scan 36 (shown in FIG. 2A). Computer 34 may be operatively connected to control a relative position between component 12 and X-ray source 26 and X-ray detector 28 by controlling a movement (e.g., rotation and/or translation) of component 12 and/or controlling a movement (e.g., rotation and/or translation) of X-ray source 26 and X-ray detector 28. Computer 34 may be configured to identify region(s) R of interest based on CT scan 36 using a suitable ML or other algorithm. Alternatively, the identification of region(s) R of interest may be made manually by a human based on CT scan 36.

To facilitate thermography functionality, combined system 50 may include transducer 40, excitation driver 42 and IR sensor 44. Transducer 40, excitation driver 42 and/or IR sensor 44 may be movably or fixedly mounted to a common chassis 52 of combined system 50. Computer 34 may be operatively connected to (e.g., in data communication with) excitation driver 42 and IR sensor 44 to control the operation of excitation driver 42 and IR sensor 44, and also acquire thermographic image 46 (shown in FIG. 2B). Computer 34 may be operatively connected to control a relative position between component 12 and IR sensor 44 by controlling a movement (e.g., rotation and/or translation) of component 12 and/or controlling a movement (e.g., rotation and/or translation) of IR sensor 44 to bring region(s) R of component 12 within the field of view of IR sensor 44. Computer 34 may be configured to process thermographic image 46 and determine health condition 48 of component 12 based on thermographic image 46 using a suitable ML or other algorithm.

Component 12 may be held by fixture 32, which may be controllably movable relative to the X-ray source 26, X-ray detector 28, transducer 40 and/or IR sensor 44. In some embodiments, fixture 32 and component 12 may be translatable and/or rotatable to permit alignment with X-ray source 26 in preparation for CT. Component 12 may be rotated about rotation axis RA during the acquisition of CT scan 36. Once region(s) R has/have been identified, fixture 32 and component 12 may be translated and/or rotated to permit alignment of region(s) R with IR sensor 44 in preparation for thermography.

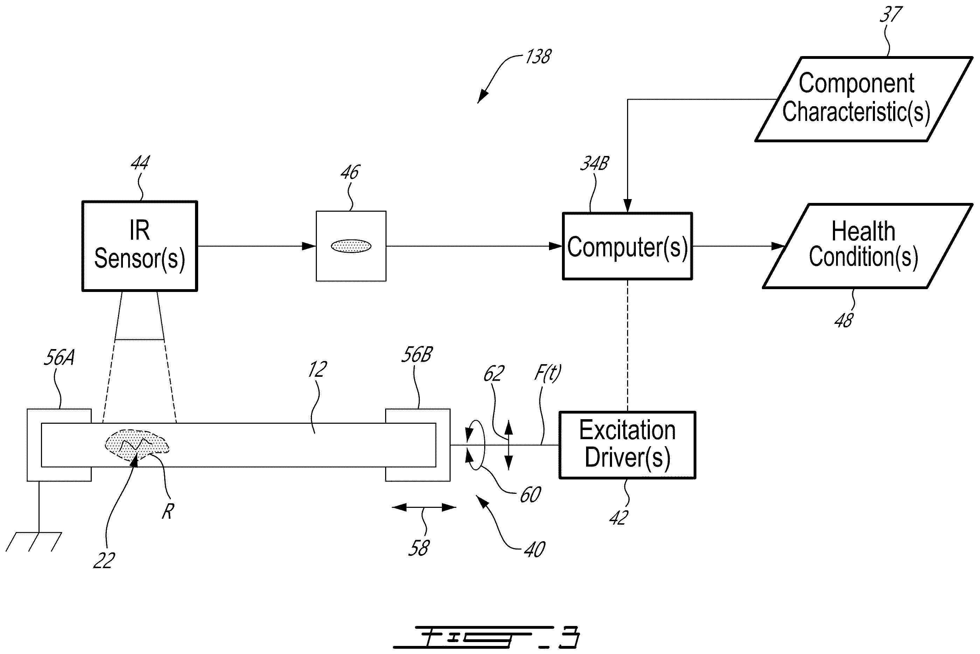

FIG. 3 is a schematic illustration of another exemplary thermography system 138 for inspecting component 12 of aircraft power plant 10. Thermography system 138 may be incorporated into combined system 50 as an alternative to thermography system 38. Thermography system 138 may include elements of thermography system 38 and like elements are identified using like reference numerals. Similarly to thermography system 38, thermography system 138 may be operable to determine one or more health conditions 48 of component 12 using infrared non-destructive inspection of materials with thermography. The excitation of component 12 may be provided by mechanical loading using transducer 40. Transducer 40 may be configured to apply repeated tensile, compressive, bending and/or torsional loading on component 12. Transducer 40 may include stationary clamp 56A engageable with a first portion of component 12, and actuated (movable) clamp 56B engageable with a second portion of component 12. Actuated clamp 56B may be drivingly connected to an actuator controlled (e.g., driven) by excitation driver 42, which may optionally be operatively connected to computer 34B. Excitation driver 42 may operate independently of computer 34B or may operate under the control/supervision of computer 34B.

In some embodiments, excitation driver 42 and computer 34B may be in data communication with each other so that parameters (e.g., amplitude, frequency) of the excitation may be communicated from computer 34B to excitation driver 42 or from excitation driver 42 to computer 34B. The excitation delivered to component 12 may be constant over time or may have one or more parameters that vary as a function of time. The excitation delivered to component 12 may be adjustable. Transducer 40 may be operable in a controlled manner to input cyclic loading F(t) (i.e., as a function of time) into component 12. In some embodiments, transducer 40 may be part of a (e.g., servo-hydraulic) mechanical (e.g., fatigue) testing system.

In some embodiments, actuatable clamp 56B may be actuatable in a reciprocating linear manner along arrow 58 to apply tensile (i.e., stretching) and/or compressive loading to component 12. In some embodiments, actuatable clamp 56B may, alternatively or in addition, be actuatable in a reciprocating rotary manner along arrow 60 to apply torsional loading to component 12. In some embodiments, actuatable clamp 56B may, alternatively or in addition, be actuatable in a reciprocating manner along arrow 62 to apply bending loading to component 12. The mechanical loading applied via actuatable clamp 56B may be applied in a manner that is not intended to (e.g., further) damage component 12 during the test. Accordingly, system 138 may be used to conduct non-destructive inspection of component 12.

Computer 34B may be in data communication with IR sensor 44 to receive digital thermographic image 46 acquired while the mechanical excitation is being applied to component 12 using transducer 40. Using thermographic image 46 and optionally other data, computer 34B may be operable to generate one or more outputs indicative of one or more health conditions 48 of component 12.

FIG. 4 is a schematic illustration of an exemplary computer 34, 34A, 34B (referred generally hereinafter as "computer 34") of combined system 50 of FIG. 2C. Computer 34 may be part of a specialized controller or other suitable hardware. Computer 34 may include one or more data processors 64 (referred hereinafter in the singular as "processor 64") and non-transitory machine-readable memory(ies) 66 (referred hereinafter in the singular).

Computer 34 may perform one or more procedures or steps defined by instructions 68 (e.g., software, program code) stored in memory 66 and executable by processor(s) 64. For example, Computer 34 may optionally be configured to generate a first output (i.e., data) indicative of one or more CT parameters 35 based on one or more characteristics 37 of component 12 using first ML algorithm 70A. CT parameter(s) 35 may then be used by computer 34 or another computer to automatically control the operation of CT system 24 accordingly. For example, computer 34 may be operable to, using CT parameter(s) 35, cause X-ray source 26 and X-ray detector 28 to perform X-ray CT on (i.e., scan) component 12 to acquire a digital 3D representation of component 12 in the form of CT scan 36. In some embodiments, computer 34 may be operable to extract one or more characteristics 37 of component 12 from CT scan 36.

Computer 34 may be configured to generate a second output (i.e., data) indicative of one or more thermography parameters 45 based on one or more characteristics 37 of component 12 using second ML algorithm 70B. Thermography parameters 45 may then be used by computer 34 or another computer to automatically control the operation of thermography system 38 accordingly. For example, computer 34 may be operable to, using thermography parameter(s) 45, cause transducer 40 to mechanically excite component 12 to induce a thermal response in region R of component 12 containing defect 22. In some embodiments, computer 34 may be operable to cause IR sensor 44 to acquire thermographic image 46 of component 12 while the thermal response is exhibited by component 12.

Computer 34 may optionally be configured to generate an output (i.e., data) indicative of one or more health conditions 48 based on CT scan 36 and thermographic image 46 received, and/or perform other tasks.

Processor(s) 64 may include any suitable device(s) configured to cause a series of steps to be performed by computer 34 so as to implement a computer-implemented process such that instructions 68, when executed by computer 34 or other programmable apparatus, may cause the functions/acts specified in the methods described herein to be executed. Processor(s) 64 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 66 may include any suitable machine-readable storage medium. Memory 66 may include non-transitory computer-readable storage medium such as, for example, but not limited to, an electronic, magnetic, optical, electromagnetic, infrared, or semiconductor system, apparatus, or device, or any suitable combination of the foregoing. Memory 66 may include any storage means (e.g., devices) suitable for retrievably storing machine-readable instructions 68 executable by processor(s) 64. In some embodiments, machine-readable instructions 68 may include one or more computer-implemented trained digital models such as ML algorithms 70A, 70B also stored in memory 66.

First ML algorithm 70A may be trained using ML on historical data associating previous CT parameters with previous characteristics of components inspected using X-ray CT. Second ML algorithm 70B may be trained using ML and historical data associating previous thermography parameters with previous characteristics of components inspected using thermography. ML algorithm(s) 70A, 70B may be one or more suitable artificial intelligence models. In some embodiments, ML algorithm(s) 70A, 70B may each include a trained artificial neural network (ANN) as explained below. Instructions 68 may be executable by processor 64 and configured to cause processor 64 to use ML algorithm(s) 70A, 70B, to facilitate non-destructive inspection of component 12 using thermography.

In some embodiments, first digital twin 72A of CT system 24 may optionally be stored in memory 66 and used by computer 34 to validate CT parameter(s) 35 that is/are determined through the use of first ML algorithm 70A. First digital twin 72A may be a digital model of CT system 24 that serves as a substantially equivalent digital counterpart of CT system 24 for practical purposes such as simulation. For example, first digital twin 72A may be configured for modeling the operation of CT system 24 with component 12 and simulate the acquisition of CT scan 36. First digital twin 72A may help determine which CT parameters 35 are playing a major role in the acquisition of CT scan 36. First digital twin 72A may help predict suitable CT parameters 35 to permit the acquisition of suitable CT scans 36 based on one or more characteristics 37 of component 12 such as a part type, part number, material and data about the service history of component 12.

For the purpose of validation, first CT parameter(s) 35 determined through the use of first ML algorithm 70A may be compared with second CT parameter(s) independently determined using first digital twin 72A. Validation may be achieved when the first CT parameter(s) 35 substantially match(es) the second CT parameter(s). For example, when the first CT parameter(s) 35 determined with ML algorithm 70A is/are within a prescribed range (i.e., tolerance) of the second CT parameter(s) determined with first digital twin 72A, then the first CT parameter(s) may be validated (i.e., confirmed) with first digital twin 72A.

In some embodiments, second digital twin 72B of thermography system 38, 138 may optionally be stored in memory 66 and used by computer 34 to validate thermography parameter(s) 45 that is/are determined through the use of second ML algorithm 70B. Second digital twin 72B may be a digital model of thermography system 38, 138 that serves as a substantially equivalent digital counterpart of thermography system 38, 138 for practical purposes such as simulation. For example, second digital twin 72B may be configured for modeling the operation of thermography system 38, 138 with component 12 and simulate the acquisition of thermographic image 46. Second digital twin 72B may help determine which thermography parameters 45 are playing a major role in the acquisition of thermographic image 46. Second digital twin 72B may help predict suitable thermography parameters 45 to permit the acquisition of suitable thermographic images 46 based on one or more characteristics 37 of component 12 such as a part type, part number, material, region(s) R, ambient temperature, ambient lighting, and data about the service history of component 12.

For the purpose of validation, first thermography parameter(s) 45 determined through the use of second ML algorithm 70B may be compared with second thermography parameter(s) independently determined using second digital twin 72B. Validation may be achieved when the first thermography parameter(s) 45 substantially match(es) the second thermography parameter(s). For example, when the first thermography parameter(s) 45 determined with second ML algorithm 70B is/are within a prescribed range (i.e., tolerance) of the second thermography parameter(s) determined with second digital twin 72B, then the first thermography parameter(s) may be validated (i.e., confirmed) with second digital twin 72B.

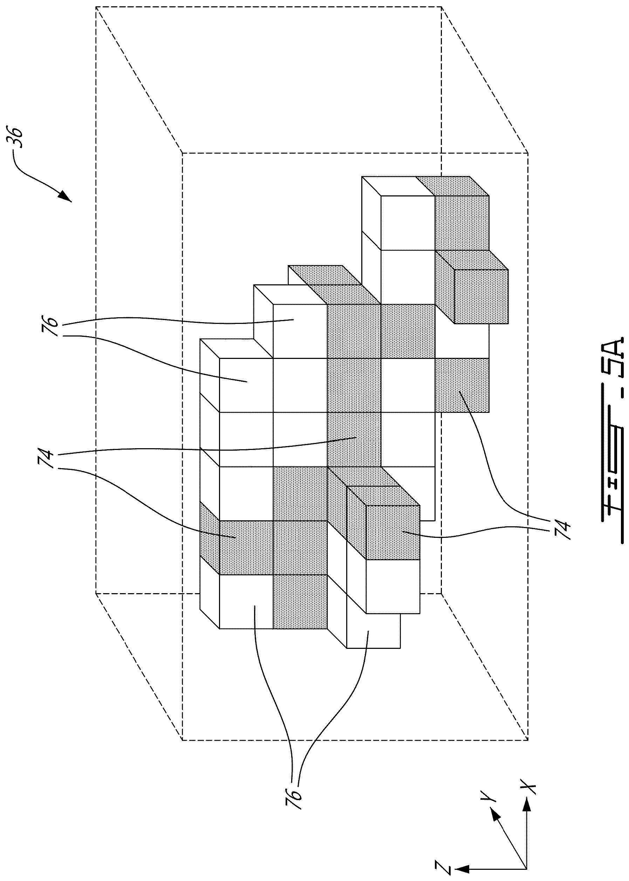

FIG. 5A is a schematic representation of a magnified portion of CT scan 36 acquired with CT system 24 and/or with combined system 50. CT scan 36 may be a digital representation of component 12 in the form of a volume of voxels. CT scan 36 or part thereof may be rendered in 2-dimensional image(s) and/or viewed on a 2-dimensional display. As X-rays 30 pass through component 12, they are attenuated differently by the material of component 12 according to material density. Artifacts (i.e., material defects) exhibited in CT scan 36 may be caused by transitions between low- and high-density materials within component 12.

Artifacts may be identified using voxels having different values. For example, artifacts may be visually identified using voxels of different colors or of different grayscale shades. As an example, FIG. 5A shows dark voxels 74 and light voxels 76 within CT scan 36. Dark voxels 74 may indicate an unexpected low-density material or empty space within the selected volumetric region of CT scan 36. Dark voxels 74 may potentially indicate the presence of defect 22 such as one or more voids or cracks for example. CT scan 36 may have voxels of additional shades and/or colors to illustrate density gradients. The location of CT scan 36 relative to the geometry of component 12 may be known so that the location of dark voxels 74 within component 12 may be determined and optionally used to identify region(s) R of interest. When analyzing CT scan 36, computer 34, through the use of a ML algorithm or other (e.g., deterministic, heat/density map) algorithm(s), may evaluate the values of the voxels 74, 76 in CT scan 36 to identify region(s) R. In some embodiments, a ML algorithm may use image post-processing to establish identify region(s) R by analyzing variations in voxels 74, 76.

Region(s) R may include regions having one or more artifacts (e.g., dark voxels 74) that are indicative of a defect of concern. Region(s) R may be identified based on prescribed threshold of size and/or number of artifacts in CT scan 36. In some embodiments, CT scan 36 may be analyzed with a ML algorithm including one or more classifiers having an image analysis functions that automatically classifies structures (e.g., subsets) of CT scan 36 as either being indicative of a defect or not indicative of a defect.

In some embodiments, region(s) R may be (e.g., 2-dimensional) flat or curved regions that is/are projected onto a nearest outer surface of component 12 to facilitate the subsequent orienting of IR sensor 44 if necessary for thermography. Alternatively, region(s) R may be one or more 3D (i.e., volumetric) regions that envelop a cluster of dark voxels 74 and IR sensor 44 may be oriented toward the 3D regions within (e.g., below the surface of) component 12 if necessary for thermography.

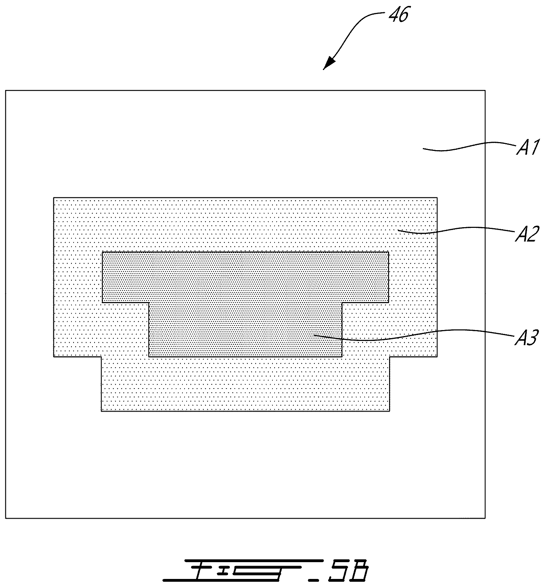

FIG. 5B is a schematic representation of a magnified portion of digital thermographic image 46 acquired with thermography system 38, 138 and/or with combined system 50. Thermographic image 46 may also be referred to as a thermal image or a thermogram and may provide a visual display of the amount of infrared energy emitted, transmitted, and reflected by an object. Accordingly, areas of different colors or shades within thermographic image 46 may represent areas of different temperatures on component 12. The representation of thermographic image 46 shown in FIG. 5B shows pixels of different shades (i.e., values) in grayscale to represent different colors in thermographic image 46. Pixels in first area A1 have a lighter shade to represent a lower temperature. Pixels in third area A3 have a darker shade to represent a higher temperature corresponding to the location of defect 22, which may be a surface defect, or internal and below an outer surface of component 12. Pixels in second area A2 have an intermediate shade to represent a temperature that is between those of first area A1 and third area A3. Thermographic image 46 may have additional shades and/or colors to illustrate temperature gradients. The location of thermographic image 46 relative to the geometry of component 12 may be known so that the location of defect 22 on component 12 may be determined and optionally used to determine health condition 48.

When analyzing thermographic image 46, computer 34, through the use of a ML algorithm or other (e.g., deterministic) algorithm, may evaluate the values of the pixels in thermographic image 46. A ML algorithm may use image post-processing to establish a thermographic map which may allow to identify defect 22 by analyzing thermal variations. For example, computer 34 may use the values of the pixels to extract thermographic features from thermographic image 46 and assess one or more characteristics of defect 22. Thermographic features may include: a relative percentage of the total area A that is covered by defect 22 (e.g., the fraction of area A1 over the total area A1+A2+A3); dimensions (e.g., length, width) of second area A2 and/or of third A3; the shape of second area A2 and/or of third A3; the location of defect 22 on component 12 (e.g., whether defect 22 is proximate to an edge, to a blade root or to a blade tip); the thermal diffusivity of defect 22 by considering the transient and steady state responses to the excitation; and/or the population density of defect(s) 22. Computer 34 may also consider a probability of detection and/or confidence interval in detecting certain types of defects with the experimental setup and parameters that are being used.

Computer 34 may, in some embodiments, determine health condition 48 directly from thermographic image 46. Health condition 48 may be displayed to an operator of thermography system 38, 138 or of combined system 50 via a display device for example. In some embodiments, computer 34 may first relate/associate thermographic image 46 to one or more characteristics of defect 22 and then relate/associate the characteristic(s) of defect 22 to health condition 48. Thermographic features may be extracted from thermographic images 46 either manually and/or using image analysis software such as a ML algorithm. The extracted thermographic features may be compared to a reference database of thresholds and criteria to identify defect 22 in component 12. Information that may be included in the reference database may include data acquired during product development and certification of component 12 (e.g., mechanical testing), field failure data from in-service components acquired at (e.g., hot section) inspection or overhauls of power plant 10, and/or in-service performance metrics such as time-on-wing, hours of operation, number of flight cycles, etc.

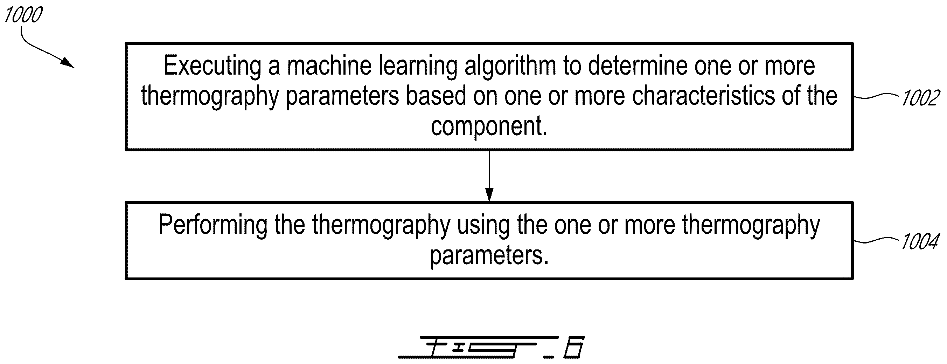

FIG. 6 is a flow diagram of an exemplary method 1000 of inspecting component 12 or another component containing one or more defects 22 using thermography. Method 1000 may be performed using systems 24, 38, 138, combined system 50 and/or using another system. For example, machine-readable instructions 68 may be configured to cause computer 34 to perform at least part of method 1000. Method 1000 may include other actions disclosed herein. Method 1000 may include elements of systems 24, 38, 138 and/or of combined system 50. In various embodiments, method 1000 may include:
executing a machine learning algorithm (e.g., second ML algorithm 70B) to determine one or more thermography parameters 45 based on one or more characteristics 37 of component 12 (block 1002);
using thermography parameter(s) 45:
   exciting component 12 to induce a thermal response in region R of component 12 containing defect 22; and
   acquiring, with IR sensor 44 while the thermal response is exhibited, thermographic image 46 of region R of component 12 containing defect 22 (block 1004).

Second ML algorithm 70B may have been trained using ML on historical data associating previous thermography parameters with previous characteristics of components inspected using thermography.

Thermography parameter(s) 45 may include one or more suitable excitation settings for exciting component 12. Method 1000 may include exciting component 12 according to the excitation setting(s). Such excitation settings may include, for example, a method of excitation (e.g., tap, sonic pulse, electromagnetic loading, tensile loading, compressive loading), type of fixture 32 (e.g., clamping) an excitation frequency, an excitation magnitude, an excitation duration, and/or an excitation location on component 12. The excitation settings may facilitate the selection of a suitable type of thermography system 38, 138 (e.g., type of transducer 40) and also facilitate the operation of thermography system 38, 138 (e.g., excitation driver 42) according to the determined excitation settings without requiring significant trial and error.

Thermography parameter(s) 45 may include one or more suitable image acquisition settings for acquiring thermographic image 46. Method 1000 may include acquiring thermographic image 46 according to the image acquisition setting(s). Such image acquisition settings may include, for example, a resolution of IR sensor 44, an exposure time, distance of component 12 from IR sensor 44, a focal length, an aperture setting, and/or a shutter speed/angle. The image acquisition settings may facilitate the selection of a type of IR sensor 44 and also facilitate the operation of thermography system 38, 138 according to the determined image acquisition settings without requiring significant trial and error.

Before executing second ML algorithm 70B, method 1000 may include training second ML algorithm 70B. As explained further below, second ML algorithm 70B may be trained using ML and historical data associating the previous thermography parameters with the previous characteristics of components inspected using thermography.

In various embodiments of method 1000, characteristics 37 of component 12 may be provided manually by an operator or automatically through other means. Characteristics 37 may, for example, include a part number, a part type, a material, a location on component 12 of region R of defect 22, a size of region R, and/or a shape of region R. **In** some embodiments some of characteristics 37 may be provided through X-ray CT using CT system 24. For example, method 1000 may include extracting one or more characteristics 37 of component 12 from CT scan 36 acquired with CT system 24 before executing second **ML** algorithm 70B. The one or more characteristics 37 may then be used for the execution of second **ML** algorithm 70B to determine suitable thermography parameters 45 that are tailored specifically to the specific inspection situation at hand. Accordingly, method 1000 may include using X-ray CT to scan component 12 to acquire CT scan 36 of component 12 before executing second **ML** algorithm 70B.

**In** some embodiments, method 1000 may include validating one or more thermography parameters 45 determined through the use of second **ML** algorithm 70B using second digital twin 72B. The validation of thermography parameters 45 may be performed before exciting component 12 to induce the thermal response.

The identification of region R and/or other characteristics 37 of component 12 from CT scan 36 may be performed using a deterministic (e.g., ruled-based) algorithm or using a **ML** algorithm. For example, method 1000 may include reading and processing CT scan 36 to identify region R of component 12 containing defect 22. Method 1000 may include generating an output indicative of the identified region R of component 12 containing defect 22. The output may include a visual representation of region R superimposed on a surface of component 12 displayed on a display device, and optional dimensions locating region R from a point of reference on physical component 12 or a point of reference on fixture 32. **In** an automated system, such visual representation may not be required and the region R may be stored in memory 66 and used by combined system 50 to subsequently determine thermography parameters 45 and perform thermography.

**In** embodiments where X-ray CT is performed on component 12 in preparation for thermography, method 1000 may include, before scanning component 12 using X-ray CT, executing first **ML** algorithm 70A to determine one or more CT parameters 35 based on one or more characteristics 37 of component 12. Method 1000 may then include scanning component 12 using X-ray CT according to the one or more determined CT parameters 35.

Before executing first **ML** algorithm 70A, method 1000 may include training first **ML** algorithm 70A. As explained further below, first **ML** algorithm 70A may be trained using **ML** and the historical data associating previous CT parameters with previous characteristics of components inspected using X-ray CT.

**In** some embodiments, method 1000 may include validating one or more CT parameters 35 determined through the use of first **ML** algorithm 70A using first digital twin 72A. The validation of CT parameters 35 may be performed before scanning component 12 to CT scan 36 of component 12 using X-ray CT.

Method 1000 may include analyzing thermographic image 46 either by visual inspection by an operator or automatically using a deterministic (e.g., ruled-based) algorithm or using another **ML** algorithm. Analyzing thermographic image 46 may include determining health condition 48 of component 12. Thermographic image 46 and/or characteristic(s) of defect 22 may be compared to one or more predefined (e.g., thermal) signatures, thresholds (e.g., from calibration reference standards), guidelines and/or ranges to determine the appropriate health condition 48. Such signatures, thresholds, guidelines and/or ranges may be predetermined and stored in memory 66. In some embodiments, such signatures, thresholds, guidelines and/or ranges may be stored/represented in a ML algorithm trained on suitable historical data.

Health condition 48 may be indicative of whether the estimated remaining service life of component 12 is sufficient for component 12 to be installed (e.g., fastened) in power plant 10. Health condition 48 may include a quantification of an estimated remaining service life for component 12 and/or may include a service category for component 12. For example, if the remaining service life is determined not to be significantly reduced by defect 22, health condition 48 may be set to the "acceptable" service category (i.e., conforming to applicable quality standard(s)) so that component 12 may be installed into power plant 10 and used during operation of power plant 10. In situations where the remaining service life of component 12 is determined to be unsuitable for service but may be improved by way of repair, health condition 48 may be set to the "needs rework" service category to indicate that component 12 may be repaired to improve its service life. In some situations, repairing component 12 may include replacing a portion of component 12 containing defect 22 with new material. In situations where the remaining service life of component 12 is determined to be unsuitable for service and a characteristic of defect 22 indicates that defect 22 is beyond repair, health condition 48 may be set to the "rejected" service category (i.e., not conforming to applicable quality standard(s)) so that component 12 may not be installed in power plant 10. When health condition 48 is set to the "rejected" service category, component 12 may be discarded or recycled.

In some automated embodiments, such as when combined system 50 is being used, method 1000 may include acquiring CT scan 36 and acquiring thermographic image 46 while component 12 remains in the same fixture 32.

Further aspects of method 1000 are described below in relation to the subsequent figures.

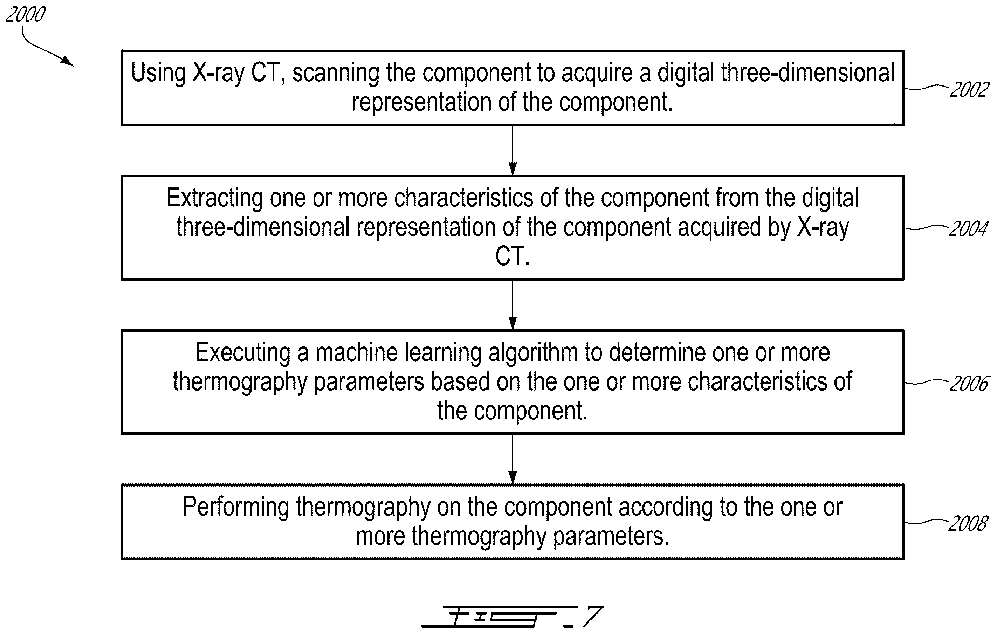

FIG. 7 is a flow diagram of another exemplary method 2000 of inspecting component 12 or other component with thermography. Method 2000 may include some or all of method 1000. Method 2000 may be performed using systems 24, 38, 138, combined system 50 and/or using another system. For example, machine-readable instructions 68 may be configured to cause computer 34 to perform at least part of method 2000. Method 2000 may include elements of systems 24, 38, 138 and/or of combined system 50. In various embodiments, method 2000 may include:
using X-ray CT, scanning component 12 to acquire a digital 3D representation (e.g., CT scan 36) of component 12 (block 2002);
extracting one or more characteristics 37 of component 12 from CT scan 36 of component 12 (block 2004);
executing second ML algorithm 70B to determine one or more thermography parameters 45 based on the one or more characteristics 37 of component 12 (block 2006);
performing thermography on component 12 according to the one or more thermography parameters 45 (block 2008) by:
   exciting component 12 to induce heating in a part of component 12 containing defect 22; and
   acquiring thermographic image 46 of the part of component 12.

Second ML algorithm 70B may have been trained using ML learning on historical data associating previous thermography parameters with previous characteristics of components inspected using thermography.

Thermography parameter(s) 45 may include one or more excitation settings for exciting component 12. Method 2000 may include exciting component 12 according to the excitation setting.

Thermography parameter(s) 45 may include one or more image acquisition settings for acquiring thermographic image 46. Method 2000 may include acquiring thermographic image 46 according to the one or more image acquisition settings.

In some embodiments, method 2000 may include, before scanning component 12 using X-ray CT, executing first ML algorithm 70A to determine one or more CT parameters 35 based on one or more (i.e., other) characteristics 37 of component 12. First ML algorithm 70A may have been trained using ML on historical data associating previous CT parameters with previous characteristics of components inspected using X-ray CT. Method 2000 may include scanning component 12 using X-ray CT according to the one or more determined CT parameters 35.

In some automated embodiments, such as when combined system 50 is being used, method 2000 may include acquiring CT scan 36 and acquiring thermographic image 46 while component 12 remains in the same fixture 32.

Further aspects of method 2000 are described below in relation to the subsequent figures.

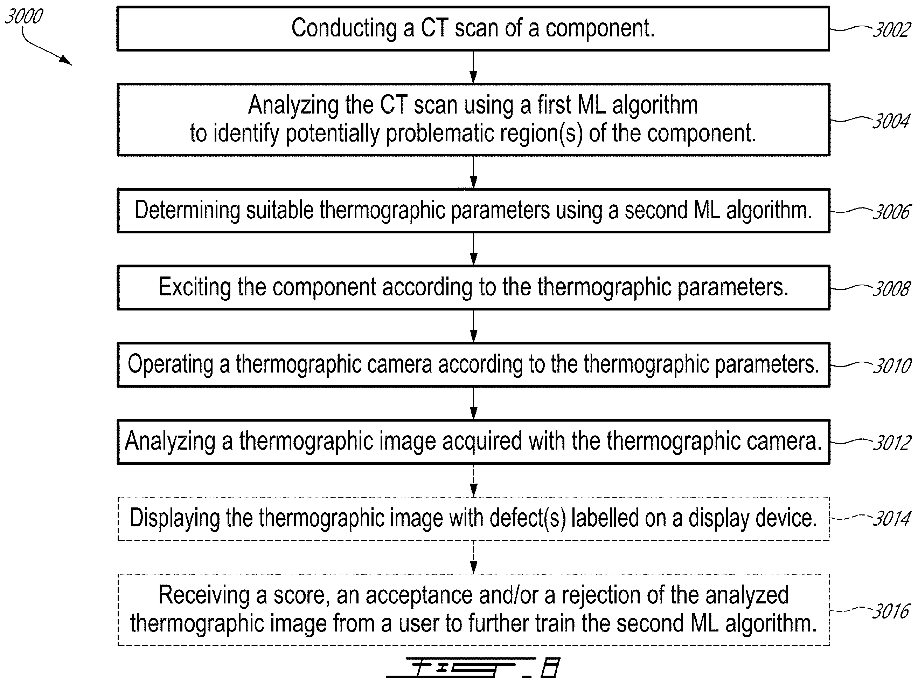

FIG. 8 is a flow diagram of another exemplary method 3000 of inspecting component 12 using thermography. Method 3000 may include some or all of methods 1000 and/or 2000. Method 3000 may be performed using systems 24, 38, 138, combined system 50 and/or using another system. For example, machine-readable instructions 68 may be configured to cause computer 34 to perform at least part of method 3000. Method 3000 may include other actions disclosed herein. Method 3000 may include elements of systems 24, 38, 138 and/or of combined system 50. Method 3000 may include actions associated with the use of second ML algorithm 70B and optionally first ML algorithm 70A.

At block 3002, method 3000 may include the acquisition of CT scans 36 of component 12 to undergo inspection using infrared thermography. At block 3004, method 3000 may include the analysis of CT scan(s) 36 to identify region(s) R of interest potentially containing defect(s) 22. At block 3006, method 3000 may include the determination of suitable thermography parameter(s) 45 based on identified region(s) R and/or other characteristic(s) 37 which may have been extracted from CT scan 36. Thermography parameter(s) 45 may be specifically tailored for the inspection situation specific to component 12. At block 3008, component 12 may be excited in accordance with thermography parameter(s) 45 to cause a temperature response in region R. At block 3010, a thermographic camera which may include IR sensor 44 may be operated in accordance with thermography parameter(s) 45 to capture thermographic image 46 of the temperature response in region R. At block 3012, thermographic image 46 may be analyzed either automatically by an algorithm or by visual inspection by a human and defects may optionally be labelled on thermographic image 46. Analyzing thermographic image 46 may include determining health condition 48 of component 12 based on thermographic image 46.

In some embodiments of method 3000, thermographic image 46 may optionally be used to further train second ML algorithm 70B in an iterative manner through active learning. For example, at block 3014, thermographic image 46 may be presented to a human via a display device. The human may visually inspect thermographic image 46 and evaluate the quality of thermographic image 46 and the suitability of thermographic parameter(s) 45 for the present inspection situation. In some embodiments, a score (e.g., out of 10) may be assigned. In some embodiments, the result of the evaluation may be a binary acceptance or rejection of thermographic parameter(s) 45 for the present inspection situation. At block 3016, the score, acceptance and/or rejection may be received and optionally be used to further train second ML algorithm 70B.

Further aspects of method 3000 are described below in relation to the subsequent figures.

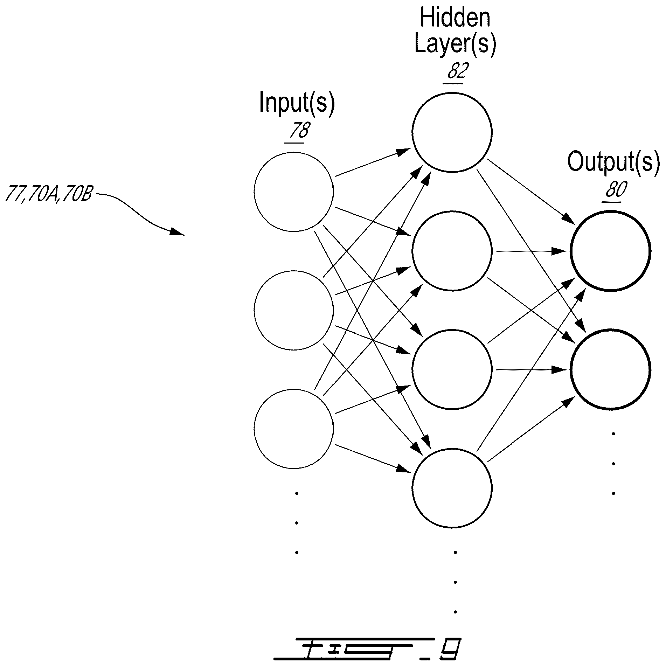

FIG. 9 is a schematic representation of an exemplary architecture of an exemplary ANN 77 of first ML algorithm 70A and/or second ML algorithm 70B. Other types of mathematical models may be used for first ML algorithm 70A and/or second ML algorithm 70B. ANN 77 may include interconnected units or nodes called artificial neurons. The illustrated circular nodes represent artificial neurons and the arrows each represent a connection from the output of one artificial neuron to the input of another. Each artificial neuron receives signals from connected neurons, then processes them and sends a signal to other connected neurons. The signal may be a real number, and the output of each neuron may be computed by a function of the sum of its inputs, called an activation function. The strength of the signal at each connection is determined by a weight, which is adjusted iteratively during the learning process (i.e., training). ANN 77 may learn from experience and be trained using training data to derive (e.g., via statistical estimation) suitable CT parameter(s) 35 and/or thermography parameter(s) 45.

The artificial neurons of ANN 77 may be aggregated into layers. Different layers may perform different transformations on their inputs. Signals may travel from the input layer 78 (referred hereinafter as "input 78") to the output layer 80 (referred hereinafter as "output 80") by passing through one or more intermediate hidden layers 82. In some embodiments, ANN 77 may be a deep neural network having two or more hidden layers 82. One or more ANNs 77 may be used to relate characteristic(s) 37 of component 12 to one or more most suitable CT parameters 35. One or more ANNs 77 may also be used to relate the same or other characteristic(s) 37 of component 12 to one or more most suitable thermography parameters 45. In some embodiments, ANN(s) 77 may be a long short-term memory network. In some embodiments, ANN(s) 77 may be one or more convolutional neural networks (CNNs) suitable to perform analysis on and extract characteristic(s) 37 (e.g., region R) from CT scan 36. The CNNs may be feed-forward neural networks that learn features by itself via filter (or kernel) optimization. In some embodiments, ANN(s) 77 may have a generative neural network architecture such as a variational autoencoder (VAE) for example. In some embodiments, ANN(s) 77 may be a recurrent neural network (RNN).

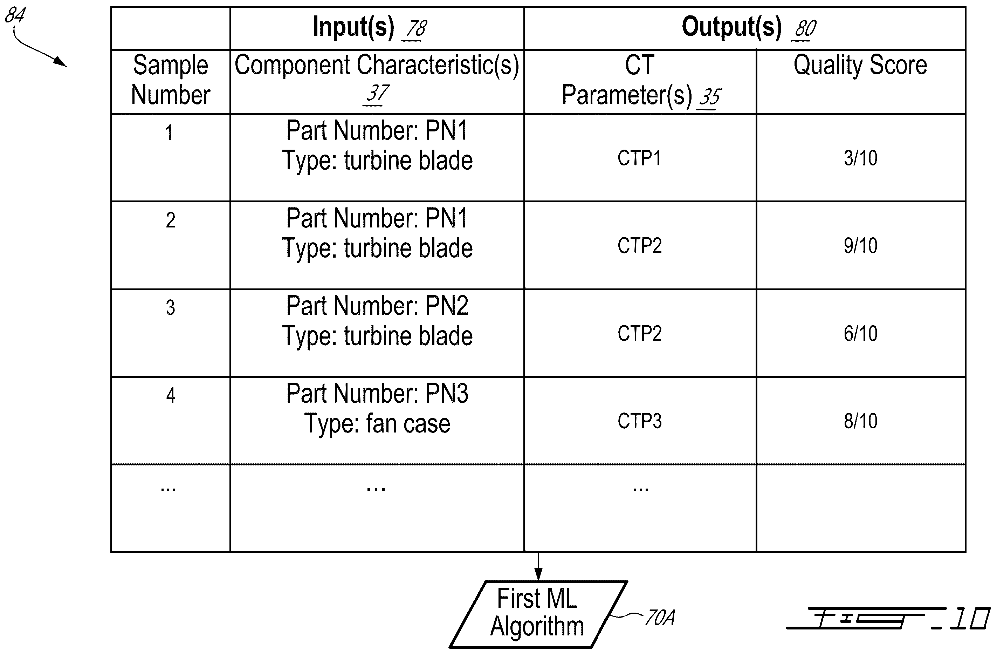

FIG. 10 shows a table containing exemplary labeled first historical data 84 used as a ML dataset to train first ML algorithm 70A using ML for determining one or more CT parameters 35 based on one or more characteristics 37 of component 12 using a suitable ML training algorithm. First historical data 84 may be labeled by a human and stored in a database, and training of first ML algorithm 70A may be performed with computer 34 or with another computer. First ML algorithm 70A may be trained to relate CT parameter(s) 35 (i.e., output 80 of ANN 77) to characteristic(s) 37 (i.e., input 78 for ANN 77) of component 12. ANN 77 learns from previous (i.e., past) CT scans and CT parameter(s) 35 (e.g., CTP1, CTP2, CTP3) associated to each CT scan.

For the purpose of training ANN 77, first historical data 84 may include a score assigned by a human. For example, for each sample number, CT parameter(s) 35 may be manually assigned a numerical score (e.g., out of 10) based on the quality, efficiency and/or cost of CT scan 36 obtained and the ability to subsequently facilitate infrared thermography with CT scan 36. CT parameters 35 may be evaluated for their ability to permit extraction of meaningful region(s) R and optionally other characteristics 37 from CT scan 36. For example, CT parameter(s) 35 may be evaluated based on factors such as their level of clarity (e.g., contrast and brightness), defect sizing accuracy (e.g., length, width, depth), defect location accuracy (e.g., depth), inspection efficiency (e.g., inspection time versus image resolution), and other optimal settings. Instead of a numerical score, CT parameters 35 for each sample may, in some embodiments, instead be manually assigned a pass or fail score based on the same or other criteria. During training of ANN 77, the score may influence the weighting functions that are used in ANN 77 to determine the most suitable CT parameters 35 to produce high-quality CT scans 36 based on characteristic(s) 37.

When a score is being assigned to a CT scan 36 obtained for each sample, CT scans 36 that are evaluated may be labeled with relevant information such as on a fraction (e.g., percent) coverage of defect relative to a selected total area, a fraction of a component length or width that is covered by the defect(s), a size (e.g., length, width, and depth) of a defect, a location of a defect within the component, an orientation of a defect, a defect's proximity to an edge of the component, a population density of the defects, a shape of the defect(s) and/or a type of defect(s).

Characteristic(s) 37 may include one or more of a visible light image acquired with an optical camera, a part number, a type of component, material, geometry, data from product development and certification experience, field-failure data, and/or in service performance metrics for example. First historical data 84 may include CT scans 36 taken of a variety of components that are relevant to the intended application for first ML algorithm 70A.

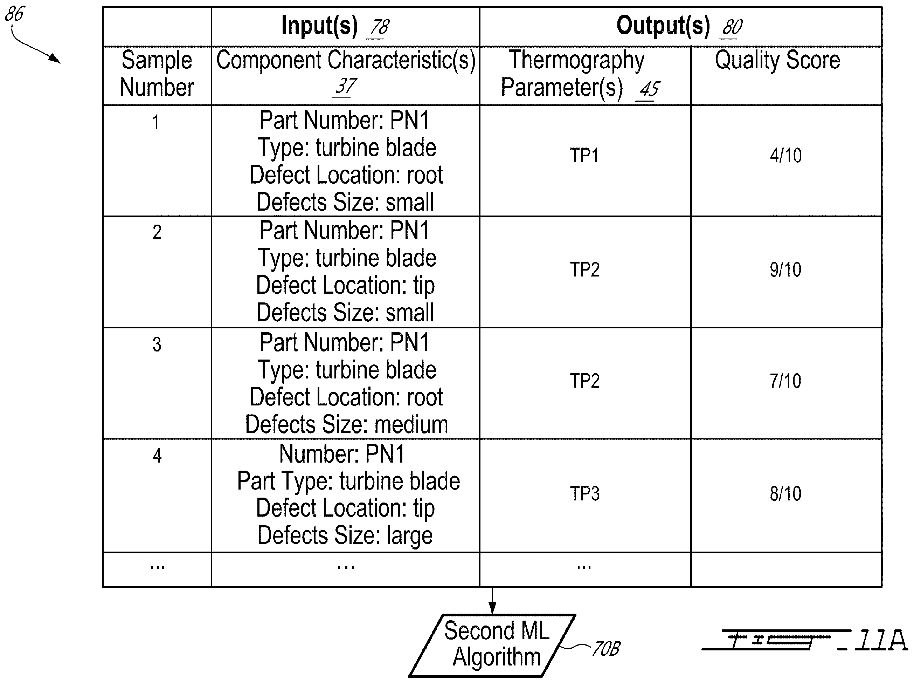

FIG. 11A shows a table containing exemplary labeled second historical data 86 used as a ML dataset to train second ML algorithm 70B using ML for determining one or more thermography parameters 45 based on one or more characteristics 37 of component 12 using a suitable ML training algorithm. Second historical data 86 may be labeled by a human and stored in a database, and training of second ML algorithm 70B may be performed with computer 34 or with another computer. Second ML algorithm 70B may be trained to relate thermography parameter(s) 45 (i.e., output 80 of ANN 77) to characteristic(s) 37 (i.e., input 78 for ANN 77) of component 12. ANN 77 learns from previous (i.e., past) thermographic images and thermography parameter(s) 45 (e.g., TP1, TP2, TP3) associated to each thermographic image. For the purpose of training ANN 77, second historical data 86 may include a score assigned by a human. For example, for each sample, thermography parameter(s) 45 may be manually assigned a numerical score (e.g., out of 10) based on the quality, efficiency and/or cost of the thermographic image obtained and the ability to subsequently use the thermographic image to determine health condition 48. Thermography parameters 45 may be evaluated for their ability to permit the quantification and qualification of defects. For example, thermographic images may be evaluated based on factors such as their level of clarity (e.g., contrast and brightness), defect sizing accuracy (e.g., length, width, depth), defect location accuracy (e.g., depth), inspection efficiency (e.g., inspection time versus image resolution), and other optimal settings. Instead of a numerical score, thermography parameter(s) 45 for each sample may, in some embodiments, instead be manually assigned a pass or fail score based on the same or other criteria. During training of ANN 77, the score may influence the weighting functions that are used in ANN 77 to determine the most suitable thermography parameter(s) 45 to produce high-quality thermographic images based on characteristic(s) 37.

When a score is being assigned to a thermographic image obtained for each sample, the thermographic images that are evaluated may be labeled with relevant information such as on a fraction (e.g., percent) coverage of defect relative to a selected total area, a fraction of a component length or width that is covered by the defect(s), a size (e.g., length, width, and depth) of a defect, a location of a defect within the component, an orientation of a defect, a defect's proximity to an edge of the component, a population density of the defects, a shape of the defect(s) and/or a type of defect(s).

Characteristic(s) 37 may include one or more of a visible light image acquired with an optical camera, a part number, a type of component, an identification of region R, material, geometry, data from product development and certification experience, field-failure data, and/or in service performance metrics for example. In some embodiments, one or more characteristic(s) 37 may be extracted from CT scan 36 as explained above. Second historical data 86 may include thermographic images taken on a variety of components that are relevant to the intended application for second ML algorithm 70B.

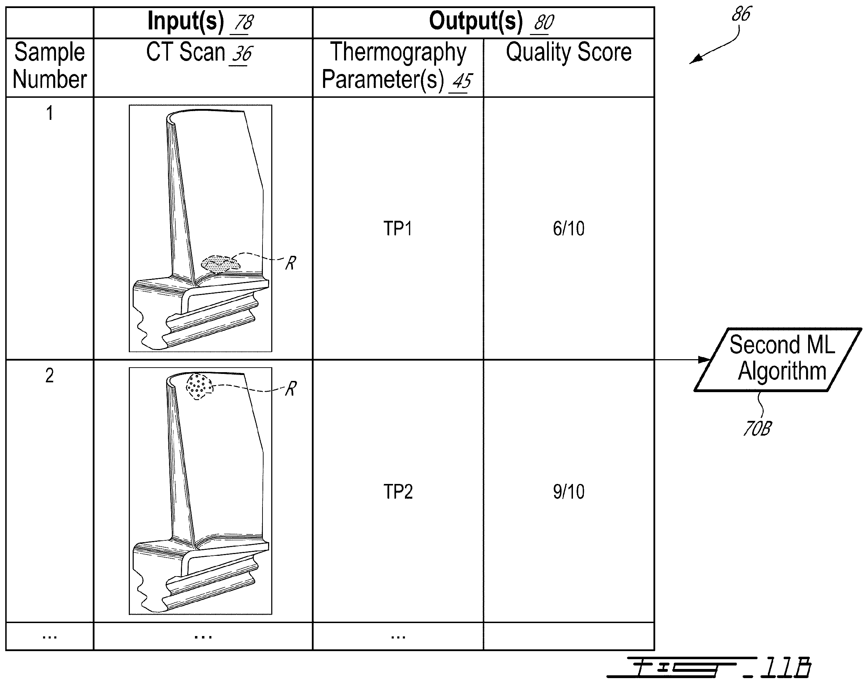

FIG. 11B shows a table containing additional or alternative exemplary labeled second historical data 86 used as a ML dataset to train second ML algorithm 70B using ML for determining one or more thermography parameters 45 based on one or more characteristics 37 of component 12 using a suitable ML training algorithm. Second historical data 86 may be labeled by a human and stored in a database, and training of second ML algorithm 70B may be performed with computer 34 or with another computer. Second ML algorithm 70B may be trained to relate thermography parameter(s) 45 (i.e., output 80 of ANN 77) to CT scan(s) 36 (i.e., input 78 for ANN 77) of component 12 based on previous thermography parameters associated with previous regions R of components inspected using thermography.

As explained above, one or more characteristic(s) 37 of component 12 may be extracted from CT scan 36 and such characteristic(s) 37 may be used to determine the most suitable thermography parameters 45. For the purpose of training ANN 77, second historical data 86 of FIG. 11B may also include a score assigned by a human.

As an example, CT scan 36 may be evaluated to identify one or more regions R that potentially contain defects of interest and thermography parameter(s) may be determined entirely or in part based on such region(s) R. Region(s) R may be one of a plurality of characteristics 37 that are used as input 78 to second ML algorithm 70B.

In some embodiments, region(s) R may be identified before the execution of second ML algorithm 70B. Alternatively, second ML algorithm 70B may be trained to identifying region(s) R of component 12 containing defect(s) 22 directly from CT scan 36 using a suitable ML training algorithm. Region(s) R may include regions having one or more artifacts (e.g., dark voxels 74) that are indicative of a defect of concern, as output 80 for ANN 77. Region(s) R may be identified based on prescribed threshold of size and/or number of artifacts in the CT scans. In some embodiments, second ML algorithm 70B may include one or more classifiers having an image analysis algorithm that automatically classifies structures (e.g., subsets) of CT scans as either being indicative of a defect or not indicative of a defect. In other words, second ML algorithm 70B may be trained to recognize patterns in CT scans that are indicative of defects of concern.

In some embodiments, second ML algorithm 70B may be trained to identify region R that contains the most severe defect(s) (e.g., a large unexpected cluster of dark voxels 74) out of component 12. In various embodiments, second ML algorithm 70B may be trained to identify region(s) R based on a fraction (e.g., percent) coverage of defect relative to a selected total area, a fraction of a component length or width that is covered by the defect(s), a size (e.g., length, width, and depth) of a defect, a location of a defect within component, an orientation of a defect, a defect's proximity to an edge of the component, a population density of the defects, a shape of the defect(s) and/or a type of defect(s).

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. A method (1000; 2000; 3000) of inspecting a component (12) with thermography, the method (1000; 2000; 3000) comprising:
executing a machine learning algorithm (70A, 70B) to determine one or more thermography parameters (45) based on one or more characteristics (37) of the component (12), the machine learning algorithm (70A, 70B) having been trained using machine learning on historical data associating previous thermography parameters (45) with previous characteristics (37) of components (12) inspected using thermography; and
using the one or more thermography parameters (45):
exciting the component (12) to induce a thermal response in a region of the component (12) containing a defect (22); and
acquiring, with an infrared sensor (44) while the thermal response is exhibited, a thermographic image (46) of the region of the component (12) containing the defect (22).

2. The method as defined in claim 1, wherein the one or more thermography parameters (45) include an excitation setting for exciting the component (12), and the method includes exciting the component (12) according to the excitation setting, and optionally the excitation setting is an excitation frequency.

3. The method as defined in claim 1 or 2, wherein the one or more thermography parameters (45) include one or more image acquisition settings for acquiring the thermographic image (46), and the method includes acquiring the thermographic image (46) according to the one or more image acquisition settings.

4. The method as defined in claim 3, wherein the one or more image acquisition settings include a resolution of the infrared sensor (44).

5. The method as defined in claim 3 or 4, wherein the one or more image acquisition settings include a distance of the component (12) from the infrared sensor (44).

6. The method as defined in any preceding claim, wherein the one or more characteristics (37) of the component (12) include a size of the region of the component (12) containing a defect (22).

7. The method as defined in any preceding claim, wherein the one or more characteristics (37) of the component (12) include the region of the component (12) containing a defect (22).

8. The method as defined in any preceding claim, comprising extracting the one or more characteristics (37) of the component (12) from a digital three-dimensional representation of the component (12) acquired by X-ray computed tomography before executing the machine learning algorithm (70A, 70B).

9. The method as defined in any of claims 1 to 7, comprising, using X-ray computed tomography (CT), scanning the component (12) before executing the machine learning algorithm (70A, 70B) to acquire a digital three-dimensional representation of the component (12).

10. The method as defined in claim 9, comprising extracting the one or more characteristics (37) of the component (12) from the digital three-dimensional representation of the component (12).

11. The method as defined in claim 9 or 10, wherein:
the machine learning algorithm is a first machine learning algorithm (70A);
the method includes:
before scanning the component (12) using X-ray CT, executing a second machine learning algorithm (70B) to determine one or more CT parameters (35) based on the one or more characteristics (37) of the component (12); and
scanning the component (12) using X-ray CT according to the one or more determined CT parameters (35).

12. The method as defined in any preceding claim, comprising, before executing the machine learning algorithm (70A, 70B), training the machine learning algorithm (70A, 70B) using machine learning and the historical data associating the previous thermography parameters (45) with the previous characteristics (37) of components (12) inspected using thermography.

13. The method as defined in any preceding claim, wherein:
the one or more thermography parameters (45) are one or more first thermography parameters (45);
exciting the component (12) and acquiring the thermographic image (46) are performed with a thermography system (38; 138);
the method includes, before exciting the component (12) to induce the thermal response:
determining one or more second thermography parameters (45) using the one or more characteristics (37) of the component (12) and a digital twin (72A, 72B) of the thermography system (38; 138); and
validating the one or more first thermography parameters (45) by comparing the one or
more first thermography parameters (45) with the one or more second thermography parameters (45).

14. A system (38; 138) for inspecting a component (12) with thermography, the system (38; 138) comprising:
a transducer (40) operable to induce a vibration in the component (12);
an infrared sensor (44) operable to acquire a thermographic image (46) of the component (12);
one or more computers (34, 34A, 34B) operatively connected to the transducer (40) and to the infrared sensor (44), the one or more computers (34, 34A, 34B) being configured to:
execute a machine learning algorithm (70A, 70B) to determine one or more thermography parameters (45) based on one or more characteristics (37) of the component (12), the machine learning algorithm (70A, 70B) having been trained using machine learning on historical data associating previous thermography parameters (45) with previous characteristics (37) of components (12) inspected using thermography;
using the one or more thermography parameters (45):
cause the transducer (40) to excite the component (12) to induce a thermal response in a region of the component (12) containing a defect (22); and
cause the infrared sensor (44) to acquire a thermographic image (46) of the component (12) while the thermal response is exhibited.

15. The system (38; 138) as defined in claim 14, comprising an X-ray source (26) and an X-ray detector (28) cooperatively operable to perform X-ray computed tomography of the component (12), the one or more computers (34, 34A, 34B) being operatively connected to the X-ray source (26) and the X-ray detector (28), wherein the one or more computers (34, 34A, 34B) are configured to, before executing the machine learning algorithm (70A, 70B):
cause the X-ray source (26) and the X-ray detector (28) to perform X-ray computed tomography on the component (12) to acquire a digital three-dimensional representation of the component (12); and
extract the one or more characteristics (37) of the component (12) from the digital three-dimensional representation of the component (12) acquired by X-ray computed tomography.
